# EUROPEAN PATENT APPLICATION

(11) **EP 3 772 827 A1**
(43) Date of publication of application: **10.02.2021**
(21) Application number: 19190523.1
(22) Date of filing: 07.08.2019
(51) Int. Cl.: H04B 7/06

(54) **ADAPTIVE ANTENNA ARRANGEMENTS FOR CELLULAR COMMUNICATION SYSTEM**

(71) Applicant: Nokia Technologies Oy, 02610 Espoo (FI)
(72) Inventor: Wigard, Jeroen, 9270 Klarup (DK); Amorim, Rafhael, 9000 Aalborg (DK); Izydorczyk, Tomasz, 9000 Aalborg (DK)
(74) Representative: Kolster Oy Ab

(57) **Abstract**

This document discloses a solution for performing measurements by a terminal device. According to an aspect, the terminal device transmits a measurement report to a serving cell, the measurement report comprising a cell identifier of a measured cell and an antenna configuration used by the terminal device to measure the cell. Then, the terminal device receives a message comprising information on a cell and/or a beam of the terminal device.

## Description

### Field

Various embodiments described herein relate to the field of wireless communications and, particularly, to adaptive antenna arrangements.

### Background

Conventional cellular communication systems are based on access nodes that provide one or more cells within their respective service areas. An access node may provide multiple cells by using adaptive antennas and spatial directivity such that the cells are formed by radio beams directed to different directions. The cells are formed to distinct geographical areas, and radio signals associated with neighboring cells are typically considered as interfering with one another. Some overlapping between the radio signals may be needed to provide seamless handover of a terminal device from one cell to another. A terminal device may carry out neighbour cell measurements in order to measure signal strengths of access nodes neighbouring a serving access node. The measurements may be carried out for a purpose of a handover, for example.

### Brief description

The scope of protection sought for various embodiments of the invention is set out by the independent claims.

The embodiments and features, if any, described in this specification that do not fall under the scope of the independent claims are to be interpreted as examples useful for understanding various embodiments of the invention. Some aspects of the disclosure are defined by the independent claims.

According to an aspect, there is provided an apparatus comprising means for performing: causing transmission of a measurement report to a serving cell of a cellular communication system, the measurement report comprising a cell identifier of a measured cell and an antenna configuration used by the apparatus to measure the cell; and receiving a message comprising information on a cell and/or a beam of the apparatus.

In an embodiment, the antenna configuration defines a beamforming configuration the apparatus has used to measure the cell.

In an embodiment, the antenna configuration defines at least one of an antenna beam angle of the apparatus, beam width of the apparatus, main beam gain of the apparatus, and an index to an antenna pattern library.

In an embodiment, the message is a handover command message.

In an embodiment, the information is for the apparatus after a handover of the apparatus and/or for consecutive measurements of the apparatus.

In an embodiment, the means are configured to measure said cell by using beamforming in neighbour cell measurements, and wherein the measurement report is a neighbour cell measurement report.

According to an aspect, there is provided an apparatus comprising means for performing: receiving, from a terminal device of a cellular communication system, a measurement report comprising a cell identifier of cell measured by the terminal device and an antenna configuration used by the terminal device to measure the cell; and transmitting a message comprising information on a cell and/or a beam of the terminal device.

In an embodiment, the measurement report comprises measurement data measured by the terminal device from the cell, wherein the antenna configuration defines a beamforming configuration the apparatus has used to measure the cell, and the means are configured to reduce an effect of the beamforming configuration on the measurement data and to determine the information on the cell and/or the beam of the terminal device on the basis of the measurement data from which the effect of the beamforming configuration has been reduced.

In an embodiment, the message is a handover command message.

In an embodiment, the information indicates a new beamforming configuration for the terminal device for use after the handover.

In an embodiment, the means are configured to determine the information on the basis of at least the cell identifier and the antenna configuration.

In an embodiment, the cellular communication system is configured to recycle cell identifiers, and the means are configured to determine a location of the terminal device and to unambiguously identify the cell on the basis of a combination of the received cell identifier, the location of the terminal device, and the received antenna configuration.

In an embodiment, the means comprises: at least one processor; and at least one memory including computer program code, the at least one memory and computer program code configured to, with the at least one processor, cause the performance of the apparatus.

According to an aspect, there is provided a method comprising: transmitting, by a terminal device of a cellular communication system, a measurement report to a serving cell, the measurement report comprising a cell identifier of a measured cell and an antenna configuration used by the terminal device to measure the cell; and receiving, by the terminal device, a message comprising information on a cell and/or a beam of the terminal device.

In an embodiment, the antenna configuration defines a beamforming configuration the apparatus has used to measure the cell.

In an embodiment, the antenna configuration defines at least one of an antenna beam angle of the apparatus, beam width of the apparatus, main beam gain of the apparatus, and an index to an antenna pattern library.

In an embodiment, the message is a handover command message.

In an embodiment, the information is for the apparatus after a handover of the apparatus and/or for consecutive measurements of the apparatus.

In an embodiment, the terminal device measures said cell by using beamforming in neighbour cell measurements, and the measurement report is a neighbour cell measurement report.

According to an aspect, there is provided a method comprising: receiving, by a network element of a cellular communication system from a terminal device, a measurement report comprising a cell identifier of cell measured by the terminal device and an antenna configuration used by the terminal device to measure the cell; and transmitting, by the network element, a message comprising information on a cell and/or a beam of the terminal device.

In an embodiment, the measurement report comprises measurement data measured by the terminal device from the cell, the antenna configuration defines a beamforming configuration the apparatus has used to measure the cell, and the network element reduces an effect of the beamforming configuration on the measurement data and determines the information on the cell and/or the beam of the terminal device on the basis of the measurement data from which the effect of the beamforming configuration has been reduced.

In an embodiment, the message is a handover command message.

In an embodiment, the information indicates a new beamforming configuration for the terminal device for use after the handover.

In an embodiment, the network element determines the information on the basis of at least the cell identifier and the antenna configuration.

In an embodiment, the cellular communication system recycles cell identifiers, and the network element determine as location of the terminal device and unambiguously identifies the cell on the basis of a combination of the received cell identifier, the location of the terminal device, and the received antenna configuration.

According to an aspect, there is provided a computer program comprising a computer program code embodied on a distribution medium readable by a computer, wherein the computer program code configures the computer, when executed by the computer, to carry out any one of the above-described methods.

### List of drawings

Embodiments are described below, by way of example only, with reference to the accompanying drawings, in which
Figure 1 illustrates a wireless communication scenario to which some embodiments of the disclosure may be applied;
Figures 2 and 3 illustrate embodiments of processes for using various antenna configurations in connection with neighbour cell measurements;
Figure 5 illustrates a signalling diagram for using spatial directivity in neighbour cell measurements according to an embodiment of the invention;
Figure 6 illustrates a signalling diagram for using spatial directivity in neighbour cell measurements according to another embodiment of the invention; and
Figures 7 and 8 illustrate block diagrams of structures of apparatuses according to some embodiments of the disclosure.

### Description of embodiments

The following embodiments are examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. A person skilled in the art will realize that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

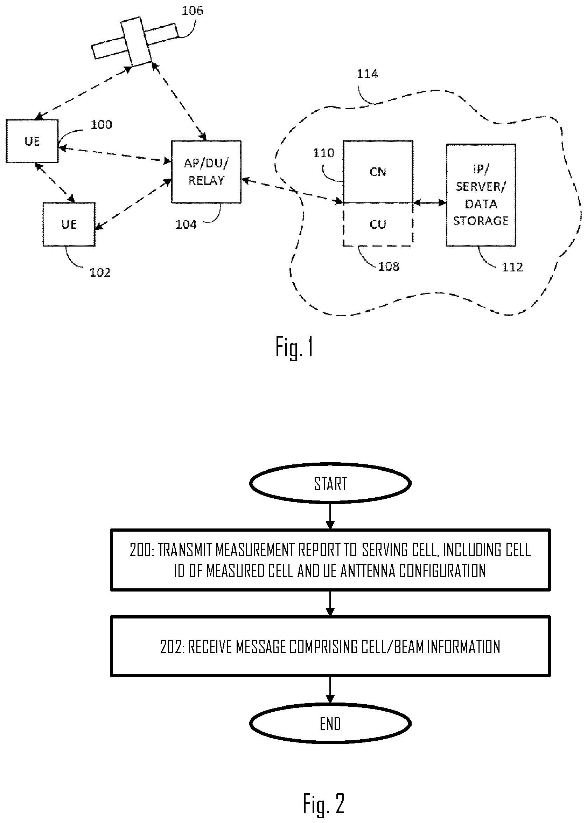

Figure 1 depicts examples of simplified system architectures only showing some elements and functional entities, all being logical units, whose implementation may differ from what is shown. The connections shown in Figure 1 are logical connections; the actual physical connections may be different. It is apparent to a person skilled in the art that the system typically comprises also other functions and structures than those shown in Figure 1.

The embodiments are not, however, restricted to the system given as an example but a person skilled in the art may apply the solution to other communication systems provided with necessary properties.

The example of Figure 1 shows a part of an exemplifying radio access network.

Figure 1 shows terminal devices or user devices 100 and 102 configured to be in a wireless connection on one or more communication channels in a cell with an access node (such as (e/g)NodeB) 104 providing the cell. (e/g)NodeB refers to an eNodeB or a gNodeB, as defined in 3GPP specifications. The physical link from a user device to a (e/g)NodeB is called uplink or reverse link and the physical link from the (e/g)NodeB to the user device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used not only for signalling purposes but also for routing data from one (e/g)NodeB to another. The (e/g)NodeB is a computing device configured to control the radio resources of communication system it is coupled to. The NodeB may also be referred to as a base station, an access point, an access node, or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.

The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (loT) network which is a scenario in which objects are provided with the ability to transfer data over a network without requiring human-to-human or human-to-computer interaction. The user device may also utilise cloud. In some applications, a user device may comprise a small portable device with radio parts (such as a watch, earphones or eyeglasses) and the computation is carried out in the cloud. The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Figure 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being capable of being integrated with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and typically fully centralized in the core network. The low-latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Figure 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of functions between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or node B (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway, maritime, and/or aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the user device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Figure 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Figure 1). A HNB Gateway (HNB-GW), which is typically installed within an operator's network may aggregate traffic from a large number of HNBs back to a core network.

In an embodiment, the terminal device is configured to perform (neighbour) cell measurements by using various antenna configurations. The terminal device may implement the various antenna configurations by dynamically selecting at least some of the following parameters that affect spatial directivity of signal transmission/reception of the terminal device: horizontal and/or vertical angle of a main radio beam, beam width of the main radio beam, gain of the main radio beam. These parameters may be affected by selecting the antenna configuration that defines digital and/or analogue beamforming control parameters. As known in the art, the beamforming or spatial filtering is a signal processing technique used for directional signal transmission or reception. Spatial directivity is achieved by combining elements in an antenna array in such a way that signals at particular transmission/reception directions experience constructive interference while others experience destructive interference. The improvement compared with omnidirectional reception/transmission is known as the directivity of the antenna array, and the antenna gain mentioned above may refer to a gain with respect to the omnidirectional transmission/reception without the spatial directivity.

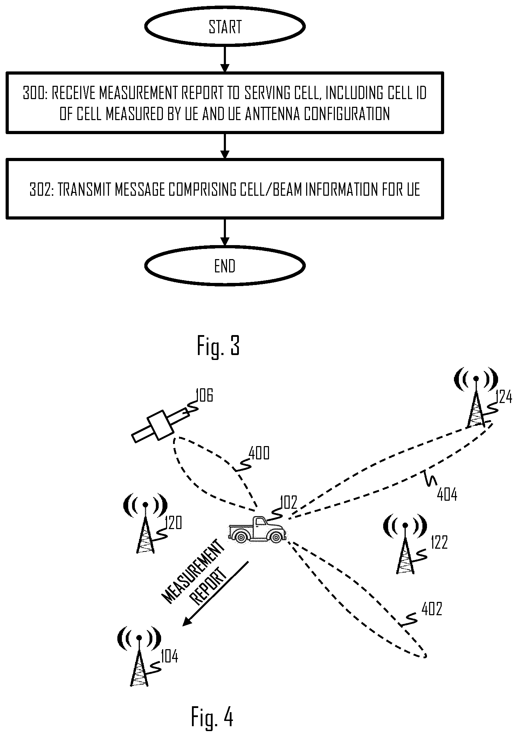

Figures 2 and 3 illustrate processes for using such spatial directivity in connection with cell measurements. Figure 2 illustrates a process executed in the terminal device, e.g. the UE 100 or 102, while Figure 3 illustrates a process to be executed in an access node serving the terminal device, e.g. the access node 104 or 106.

Referring to Figure 2, the process executed in the terminal device comprises: causing (block 200) transmission of a measurement report to a serving cell of a cellular communication system, the measurement report comprising a cell identifier of a measured cell and an antenna configuration used by the apparatus to measure the cell; and receiving (block 202) a message comprising information on a cell and/or a beam of the apparatus.

Referring to Figure 3, the process executed in the access node or another network element comprises: receiving (block 300), from a terminal device of a cellular communication system, a measurement report comprising a cell identifier of cell measured by the terminal device and an antenna configuration used by the terminal device to measure the cell; and transmitting (block 302) a message comprising information on a cell and/or a beam of the terminal device.

Enabling the beamforming in the terminal device for the neighbour cell measurements may improve the efficiency of performing the neighbour cell measurements. For example, the terminal device may employ the same beamforming configuration for both receiving a data signal from a serving access node and measuring a signal from a neighbour access node (different from the serving access node). As a consequence, the terminal device needs not to switch the beamforming configuration for the purpose of neighbour cell measurements. In another embodiment, the terminal device may select an antenna configuration that directs the main radio beam towards a direction of motion of the terminal device. Accordingly, the terminal device may search for candidate target cells from a direction to which it is moving. The direction of motion may be determined by using motion sensor data, velocity of the terminal device, or mobility of the terminal device. The directivity in the neighbour cell measurements also enables advantages to the access node and the cellular system in general, as described in connection with embodiments below.

In an embodiment, the message is transmitted/received as a response to the measurement report. For example, the access node may make a handover decision on the basis of the measurement report and transmit a handover command to the terminal device as the message.

In another embodiment, the access node may gather measurement reports from the terminal device and, optionally, from other terminal devices and transmit the message such that it is not a direct response to the measurement report. The cell/beam information in the message may still be determined on the basis of the measurement report received from the terminal device.

In an embodiment, the information on the cell and/or beam is for the terminal device to use after a handover of the terminal device.

In an embodiment, the information on the beam defines at least one new antenna configuration for the terminal device to use in neighbour cell measurements before and/or after a handover of the terminal device. The new antenna configuration may add a new antenna configuration to a set of antenna configurations used by the terminal device in the neighbour cell measurements. The new antenna configuration may replace one or more antenna configurations used by the terminal device in the neighbour cell measurements. In such embodiments, the message may be a radio resource control (re)configuration message (re)configuring the terminal device.

Figure 4 illustrates a mobility scenario where the terminal device 102 is moving towards right in the picture, e.g. in a vehicle. Let us assume that the access node 104 is currently serving the terminal device 102 and, as a consequence, a radio resource control (RRC) connection and a data connection may have been established between the terminal device 102 and the access node 104. Data may also be transmitted between the terminal device 102 and the access node 104 over the data connection. Meanwhile, the terminal device may carry out neighbour cell measurements by using one or more different antenna configurations illustrated in Figure 4 by the radio beams 400, 402, 404. The radio beams may illustrate a direction of a main radio beam from the terminal device 102. As illustrated in Figure 4, the antenna configurations used for neighbour cell measurements may direct the main radio beam towards detected neighbouring access nodes 106, 124, towards the serving access node 104 (this radio beam not shown in Figure 4), and/or towards another direction such as the beam 402. The radio beam 402 may be directed towards the direction of motion of the terminal device 102, for example.

If using omnidirectional beam for the neighbour cell measurements, the terminal device 102 might measure the access node 120 as the most potential candidate for handover. However, handover to the access node 120 may not be feasible because the terminal device 102 is moving away from the access node 120. A more suitable target cell could be provided by any one of the access nodes 106, 122, 124 because the access nodes 122 and 124 are in the direction of motion of the terminal device, and the access node 106 is capable of providing a radio channel with less obstacles. Using the spatial directivity in the neighbour cell measurements may enable more efficient target cell selection for handover, as described below. It may also improve discovery of a suitable beamforming configuration after the handover, as described below.

In an embodiment, the antenna configuration comprised in the measurement report defines a beamforming configuration the terminal device has used to measure the cell or cells. The beamforming configuration may be defined in terms of an index to a precoding codebook known to both the terminal device and the access node. The precoding codebook may define a set of beamforming configurations that each define different spatial directivity for transmission and/or reception employed by the terminal device. In general, the index to the precoding codebook may be understood as an index to an antenna pattern library known to both the terminal device and the access node.

In an embodiment, the antenna configuration defines at least one of an antenna beam angle of the apparatus, beam width of the apparatus, and main beam gain of the apparatus. The antenna beam angle may be defined in terms of an angle from a reference direction known to both the terminal device and the access node.

In an embodiment, the terminal device is configured to use the beamforming in the neighbour cell measurements, and the measurement report is a neighbour cell measurement report.

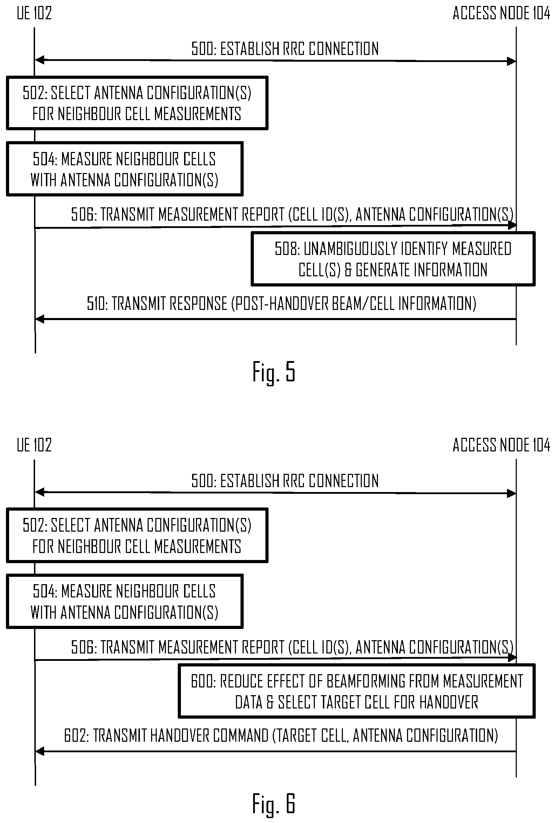

Figures 5 and 6 illustrate signalling diagrams of embodiments for performing the neighbour cell measurements, reporting them, and using such measurement data in the access node 104 or in another network element of the cellular communication system for determining and generating the information on the cell and/or the beam for the terminal device after the handover. Figure 5 illustrates a procedure for a cellular communication system that recycles cell identifiers, e.g. physical layer cell identifiers. In the LTE and 5G specifications, such an identifier is called a physical cell identifier (PCI). In a system that recycles the cell identifier, it is possible that the terminal device 102 detects two cells having the same cell identifier. Upon reporting the measurements in such a case, the access node 104 may confuse the two cells and perform wrong decisions that may cause a failure in a connection of the terminal device 102.

Figure 5 illustrates an embodiment where the access node 104 or another network element processing the measurement report received from the terminal device 102 determines a location of the terminal device and unambiguously identifies the reported cell on the basis of a combination of the received cell identifier, the location of the terminal device, and the received antenna configuration.

Referring to Figure 5, the station 102 and the access node 104 may first establish an RRC connection in step 500. The establishment may follow state-of-the-art procedures for establishing the connection between the terminal device and the access node. In block 502, the terminal device 102 selects one or more antenna configurations for the neighbour cell measurements where the terminal device detects and measures a pilot signal, a reference signal, or another corresponding signal transmitted by neighbouring cells, e.g. cells 106, 122, 124 of Figure 4. The terminal device 102 may select the antenna configuration(s) on the basis of various criteria: an antenna configuration where the main beam is directed towards the access node, an antenna configuration where the main beam directed towards a direction of motion of the terminal device, an antenna configuration where the main beam is directed towards a detected neighbouring access node, and antenna configuration where the main beam is directed towards an assumed direction of an access node. Any one or more of the above-described antenna configurations may be selected in block 502.

In block 504, the terminal device performs the neighbour cell measurements by using the antenna configuration(s) selected in block 502. The neighbour cell measurements may include measuring at least one of the following properties from a downlink pilot signal or a downlink reference signal detected by the terminal device: a reference signal received power (RSRP), a received signal strength indicator (RSSI), and a reference signal received quality (RSRQ). Any other received signal strength or quality metric may be measured in block 504. In step 506, the terminal device 102 generates the measurement report and transmits the measurement report to the serving access node 104. The measurement report may comprise, for example, the following information illustrated in Table 1:

**Table 1**

| **Cell Identifier** | **Antenna Configuration** | **Measurement data** |
|---|---|---|
| PCI #1 | AC1 | RSRP(x) |
| PCI #2 | AC2 | RSRP(y) |
| PCI #1 | AC3 | RSRP(z) |
| ... | ... | ... |

As illustrated in Table 1, the terminal device 102 has been capable of detecting two cells with the same cell identifier. These two cells are, however, detected by using different antenna configurations AC1 and AC3. Furthermore, different values of the measurement data has been measured for the two cells. Now, since the terminal device 102 reports the antenna configurations used for measuring each cell, the access node 104 is able to distinguish the two cells from one another by using the antenna configuration and the knowledge of the location of the terminal device at the time of making the measurements. The location may be determined as the latest location update made before receiving the measurement report in step 506, or the terminal device may report the location in the measurement report. In some networks such as the 5G networks, the positioning of the terminal device is an intrinsic feature of the system, e.g. for cellular vehicle-to-everything (V2X communications) and for unmanned aerial vehicles (UAVs) using the cellular connectivity. Conventional user devices such as mobile phones may also have the location tracking capability. The access node 104 may further be aware of the locations of the neighbouring access nodes, or retrieve the locations from a database.

The terminal device may report only cells for which the measurement data indicates a received signal strength above a threshold.

In block 508, the access node processes the received measurement report, wherein the processing includes identification of the cells. Referring to Figure 4, let us assume that the access nodes 106 and 122 have the same cell identifier PCI #1. With the knowledge of the current location of the terminal device 102, locations of the access nodes 106 and 122, and the antenna configurations AC1, AC3 specifying the beams 400, 402, respectively, the access node 104 may distinguish that the measurement data RSRP(x) is measured from the access node 106 and the measurement and the measurement data RSRP(z) is measured from the access node 122. The processing may involve spatial signal processing where the access node determines, by using the reported antenna configuration and the location of the terminal device, to which direction the beam is directed. Measurement data linked to an antenna configuration specifying a direction (from the location of the terminal device) providing the best match with the location of the access node 106 (from the location of the terminal device) may be mapped to the access node. Similar determination may be made for the other access node 122 having the same cell identifier. As a result, the confusion in the cell identifiers becomes solved, and the access node may generate the cell/beam information by using correctly mapped measurement data.

In block 508, the access node also generates the information on the cell/beam for the terminal device 102. In step 510, the access node transmits the response comprising the information to the terminal device 102. In an embodiment, the cell information includes a target cell for handover of the terminal device, and the response is a handover command message. In an embodiment the beam information indicates a new beamforming configuration for the terminal device for use after the handover. Referring to Figure 4, let us assume that the terminal device 102 has used the beam 402 to measure the access node 122. As illustrates, the beam is not directed directly towards the access node. On the basis of the location of the terminal device, the location of the access node 122, and the antenna configuration used by the terminal device 102 when measuring the access node 122, the access node 104 may compute an antenna configuration that adjusts the beam 402 towards the access node, and such a new antenna configuration may be signalled as the beam information in step 510. In this embodiment, the response may also be the handover command specifying the access node 122 as the target for the handover.

In general, the access node or another network element processing the measurement report may be configured to determine the cell and/or beam information on the basis of at least the cell identifier and the antenna configuration received in the measurement report. In an embodiment, the beam information includes a preferred direction of the beam in the target cell of handover. The terminal device may use the beam information when performing an attachment procedure to the target cell of handover, by using the preferred beam direction or one closest to preferred beam direction, depending on constraints in capabilities of the terminal device. In another embodiment, the beam information indicates one or more antenna configurations or beamforming configurations the terminal device should use when performing future neighbour cell measurements that shall be reported in future measurement reports. The response may be an RRC reconfiguration message, for example.

An advantage of the embodiments of Figure 5 is solving the confusions resulting from the recycling of cell identifiers. Furthermore, the solution is provided with low signalling overhead and processing requirement at the terminal device, compared with a solution where the terminal device would estimate and report angles of arrival of signals that are measured.

The use of the beamforming or otherwise directing the reception spatially may bias the measurements in the favour of an access node in the direction to which the reception beam is focused. Referring to Figure 4, the terminal device has focused the beam 404 directly towards the access node 124 and the beam 402 is directed slightly off of the access node 122. Also, the beam 400 may be capable of detecting both access nodes 106, 120. As a consequence, it may be possible that the measurement data indicates the access node 124 or even the access node 120 as the most potential target for the handover while, in fact, the access node 122 would be the most potential target because of the closest proximity in the direction of motion of the terminal device.

Figure 6 illustrates an embodiment where the access node is configured to reduce the biasing caused by the antenna configuration on the measurement data and to generate the cell/beam information on the basis of measurement data from which the effect of the antenna configuration has been reduced. In Figure 6, the steps denoted by the same reference numbers as in Figure 5 represent the same or substantially similar operations or functions.

Referring to Figure 6, upon receiving the measurement report in step 506 the access node 104 executes block 600 where it reduces the effect of the beamforming or, more generally, the antenna configuration from the measurement data and selects a target cell for handover of the terminal device on the basis of thus acquired modified measurement data. The access node may use parameters comprised in the antenna configuration comprised in the measurement report to perform the reduction or normalization. Parameters that may be used to perform the reduction may include at least one of the following: beam direction, beam width, beam gain, and the index to the precoding codebook. The access node may further use the location of the terminal device 102 and the access nodes 106, 120 to 124 in the normalization. An aim in the normalization may be to normalize the gain caused by the antenna configuration with respect to omnidirectional reception. When the antenna configuration and the location of the terminal device indicates that the beam was directed towards an access node when performing the measurement on the access node, e.g. the beam 404 towards the access node 124, the access node 104 may simply reduce the beam gain from the received measurement data. When the antenna configuration indicates that the beam was directed slightly of an access node when performing the measurement on the access node, e.g. the beam 402 with respect to the access node 122, the access node 104 may reduce less than the beam gain from the measurement data. The degree of reduction may be determined on the basis of the beam direction and the beam width, for example. The further away the beam is directed from the access node 122, the less reduction is made. In some cases, the access node may even increase the measurement data value, if it is determined that the beam was directed so far off of the access node that the beam gain towards the access node is actually lower than in a case of omnidirectional reception.

Upon determining the target cell for handover, the access node may transmit a handover command indicating the target cell in block 602. The handover command may further include the above-described beam information, e.g. the antenna configuration to be used in the target cell and/or for carrying out attachment to the target cell. In an embodiment, the antenna configuration to be added to the handover command may also be determined by using the modified measurement data from which the effect of the antenna configuration at the time of making the measurement has been removed. Accordingly, the access node 104 may determine the beam information on the basis of measurement data unbiased by the antenna configuration used by the terminal device 102.

An advantage of the embodiment of Figure 6 is the capability of finding a target cell for handover in a situation where the measurement data is biased by beamforming or similar spatial directivity. The procedure may reduce unnecessary handovers that cause signalling overhead.

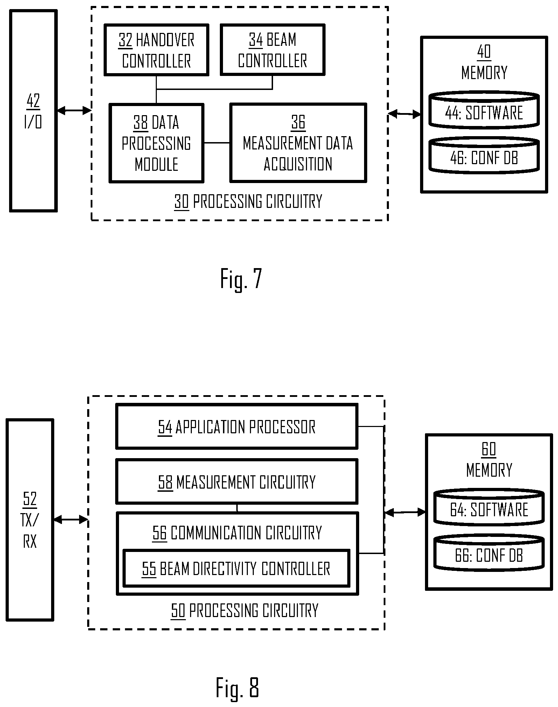

Figures 7 and 8 illustrate some embodiments of apparatuses. Figure 7 illustrates an embodiment of a structure of the above-mentioned functionalities of an apparatus executing the functions of the access node or another network element in the process of Figure 3 or any one of the embodiment described above for the access node 104. The apparatus may be comprised in the access node 104, for example. The apparatus may comprise a circuitry, e.g. a chip, a chipset, a processor, a micro controller, or a combination of such circuitries in the access node 104. The apparatus may be an electronic device comprising electronic circuitries for realizing some embodiments of the access node 104 described above.

Referring to Figure 7, the apparatus may comprise a communication interface 42 or a communication circuitry configured to provide the apparatus with capability for bidirectional communication with one or more terminal device, e.g. the terminal device 102. The bidirectional communication may include radio communication, in which case the communication interface 42 may support any one of the above-described radio communication protocols. The communication interface may include any standard, well-known digital and analogue signal processing circuitries needed to implement the supported communication protocol(s), e.g. antenna(s), amplifier(s), filter(s), frequency converter(s), and baseband signal processing circuitries.

The apparatus may further comprise a memory 40 storing one or more computer program products 44 configuring the operation of at least one processor 30 of the apparatus. The memory 40 may further store a configuration database 46 storing, for example, the precoding codebook described above, locations of terminal devices served by the access node 104, and locations of neighbouring access nodes.

The apparatus may further comprise the at least one processor or processing circuitry 30 configured to carry out the process of Figure 3 or any one of its embodiments. The processor may comprise a measurement data acquisition circuitry 36 configured to receive the measurement repot in step 300 506. The processing circuitry 30 may further comprise a measurement data processing module 38 configured to process the received measurement data, e.g. to reduce the effect of the antenna configuration from the measurement data (step 600) and/or to solve the confusion in cell identifiers (step 508). The processing circuitry 30 may further comprise a handover controller configured to make a handover decision on the basis of the measurement data processed by the module 38, e.g. to select a target cell of handover for the terminal device according to any one of the above-described embodiments. The processing circuitry 30 may further comprise a beam controller 34 configured to determine an antenna configuration for the terminal device 104 on the basis of the measurement data processed by the module 38 according to any one of the above-described embodiments. The circuitries 32 to 38 may be provided as sub-circuitries of the processing circuitry or as computer program modules executed by the processing circuitry 30.

Figure 8 illustrates an embodiment of a structure of the above-mentioned functionalities of an apparatus executing the functions of the terminal device 104 in the process of Figure 2 or any one of the embodiment described above for the terminal device. The terminal device may be a cellular phone, a sensor device, a tablet computer, a car or a vehicle, or any other device to which a cellular modem is installed. The apparatus may comprise a circuitry, e.g. a chip, a chipset, a processor, a micro controller, or a combination of such circuitries in any one of these terminal devices. The apparatus may be an electronic device comprising electronic circuitries for realizing some embodiments of the terminal device.

Referring to Figure 8, the apparatus may comprise a communication interface 52 or a communication circuitry configured to provide the apparatus with capability for bidirectional radio communication with one or more antenna modules. The communication interface 52 may any one of the cellular radio communication protocols described above. The communication interface may comprise a radio modem or a part of a radio modem and, further, radio frequency components designed for the supported cellular radio communication protocol.

The apparatus may further comprise a memory 60 for storing one or more computer program products 64 configuring the operation of at least one processor 50 of the apparatus. The memory 60 may further store a configuration database 66 storing, for example, one or more antenna configurations for use by the terminal device 104, e.g. in the neighbour cell measurements in the above-described manner.

The apparatus may further comprise the at least one processor or processing circuitry 50 configured to carry out the process of Figure 2 or any one of its embodiments. The processor may comprise a communication circuitry 56 comprising at least a digital baseband circuitry of the radio modem. The communication circuitry may carry out or control transmission and reception of cellular communication signals with one or more access nodes with which the terminal device communicates. The communication circuitry may comprise a beam directivity controller 55 configured to select one or more antenna configurations to be used by the terminal device, e.g. in response to the reception of the message in step 202, 510, or 602.

The processor 50 may further comprise a measurement circuitry 58 configured to control execution of the neighbour cell measurements described above, acquire and process thus acquired measurement data, and output the measurement data to the communication circuitry 56 to be transmitted to the serving access node 104 over the radio interface. The processing circuitry 50 may further comprise an application processor 54 configured to execute one or more computer program applications related to a primary purpose of the apparatus, wherein the primary purpose requires the cellular connectivity. For example, if the apparatus is the cellular phone, the application processor 54 may execute applications such as an internet browser, a voice communication application, or a messaging application. If the apparatus is a sensor device, the application processor 54 may execute a measurement application configured to analyse or process measurement data acquired from one or more sensors of the apparatus.

As used in this application, the term 'circuitry' refers to one or more of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the disclosure.

The processes or methods described in Figures 2 to 6 may also be carried out in the form of one or more computer processes defined by one or more computer programs. A separate computer program may be provided in one or more apparatuses that execute functions of the processes described in connection with the Figures. The computer program(s) may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

Embodiments described herein are applicable to wireless networks defined above but also to other wireless networks. The protocols used, the specifications of the wireless networks and their network elements develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. Embodiments are not limited to the examples described above but may vary within the scope of the claims.

## Claims

1. An apparatus comprising means for performing:
causing transmission of a measurement report to a serving cell of a cellular communication system, the measurement report comprising a cell identifier of a measured cell and an antenna configuration used by the apparatus to measure the cell; and
receiving a message comprising information on a cell and/or a beam of the apparatus.

2. The apparatus of claim 1, wherein the antenna configuration defines a beamforming configuration the apparatus has used to measure the cell.

3. The apparatus of claim 1 or 2, wherein the antenna configuration defines at least one of an antenna beam angle of the apparatus, beam width of the apparatus, main beam gain of the apparatus, and an index to an antenna pattern library.

4. The apparatus of any preceding claim, wherein the message is a handover command message.

5. The apparatus of any preceding claim, wherein the information is for the apparatus after a handover of the apparatus and/or for consecutive measurements of the apparatus.

6. The apparatus of any preceding claim, wherein the means are configured to measure said cell by using beamforming in neighbour cell measurements, and wherein the measurement report is a neighbour cell measurement report.

7. An apparatus comprising means for performing:
receiving, from a terminal device of a cellular communication system, a measurement report comprising a cell identifier of cell measured by the terminal device and an antenna configuration used by the terminal device to measure the cell; and
transmitting a message comprising information on a cell and/or a beam of the terminal device.

8. The apparatus of claim 6, wherein the measurement report comprises measurement data measured by the terminal device from the cell, wherein the antenna configuration defines a beamforming configuration the apparatus has used to measure the cell, and wherein the means are configured to reduce an effect of the beamforming configuration on the measurement data and to determine the information on the cell and/or the beam of the terminal device on the basis of the measurement data from which the effect of the beamforming configuration has been reduced.

9. The apparatus of claim 6 or 7, wherein the message is a handover command message.

10. The apparatus of any preceding claim 6 to 8, wherein the information indicates a new beamforming configuration for the terminal device for use after the handover.

11. The apparatus of any preceding claim 6 to 9, wherein the means are configured to determine the information on the basis of at least the cell identifier and the antenna configuration.

12. The apparatus of any preceding claim 6 to 9, wherein the cellular communication system is configured to recycle cell identifiers, and wherein the means are configured to determine a location of the terminal device and to unambiguously identify the cell on the basis of a combination of the received cell identifier, the location of the terminal device, and the received antenna configuration.

13. The apparatus of any preceding claim 1 to 12, wherein the means comprises:
at least one processor; and
at least one memory including computer program code, the at least one memory and computer program code configured to, with the at least one processor, cause the performance of the apparatus.

14. A method comprising:
transmitting, by a terminal device of a cellular communication system, a measurement report to a serving cell, the measurement report comprising a cell identifier of a measured cell and an antenna configuration used by the terminal device to measure the cell; and
receiving, by the terminal device, a message comprising information on a cell and/or a beam of the terminal device.

15. A method comprising:
receiving, by a network element of a cellular communication system from a terminal device, a measurement report comprising a cell identifier of cell measured by the terminal device and an antenna configuration used by the terminal device to measure the cell; and
transmitting, by the network element, a message comprising information on a cell and/or a beam of the terminal device.
